(19) **Europäisches Patentamt / European Patent Office / Office européen des brevets**

(11) **EP 4 694 487 A1**

(12) **EUROPEAN PATENT APPLICATION**
published in accordance with Art. 153(4) EPC

(43) Date of publication:
**11.02.2026 Bulletin 2026/07**

(21) Application number: **24825102.7**

(22) Date of filing: **22.05.2024**

(51) International Patent Classification (IPC):
**H04W 72/231** (2023.01)

(52) Cooperative Patent Classification (CPC):
**H04W 72/0453; H04W 72/231; H04W 72/232**

(86) International application number:
**PCT/CN2024/094744**

(87) International publication number:
**WO 2024/260206 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 CN 202310738360**

(71) Applicant: **Huawei Technologies Co., Ltd.**
**Shenzhen, Guangdong 518129 (CN)**

(72) Inventors:
• **CAO, Youlong**
**Shenzhen, Guangdong 518129 (CN)**
• **QIN, Yi**
**Shenzhen, Guangdong 518129 (CN)**
• **MI, Xiang**
**Shenzhen, Guangdong 518129 (CN)**
• **FU, Yu**
**Shenzhen, Guangdong 518129 (CN)**
• **XU, Rui**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **MULTI-MODAL SERVICE DATA TRANSMISSION METHOD AND APPARATUS**

(57) A multi-modal service data transmission method and apparatus are provided. The multi-modal service data transmission method includes: receiving first indication information; determining a first resource and a second resource based on the first indication information; receiving first data on the first resource; and receiving second data on the second resource. The first resource and the second resource are located in a same resource block RB. The first resource includes at least two subcarriers that are spaced in frequency domain, and/or the second resource includes at least two subcarriers that are spaced in frequency domain. According to the foregoing method, data transmission reliability can be improved.

200

| Network device | | Terminal device |
|---|---|---|

S210: Send first indication information

S220: Determine a first resource and a second resource

S230: Send first data on the first resource

S240: Send second data on the second resource

FIG. 4

## Description

This application claims priority to Chinese Patent Application No. 202310738360.0, filed with the China National Intellectual Property Administration on June 20, 2023 and entitled "MULTI-MODAL SERVICE DATA TRANSMISSION METHOD AND APPARATUS", which is incorporated herein by reference in its entirety.

## TECHNICAL FIELD

This application relates to the field of communication, and more specifically, to a multi-modal service data transmission method and apparatus.

## BACKGROUND

In recent years, with continuous progress and improvement of an extended reality (eXtended reality, XR) technology, related industries have developed vigorously. Nowadays, the extended reality technology has entered various fields closely related to production and life of people, for example, education, entertainment, military affairs, medical care, environmental protection, transportation, and public health. Extended reality is a general term for various realityrelated technologies, specifically including virtual reality (virtual reality, VR), augmented reality (augmented reality, AR), and mixed reality (mixed reality, MR). The virtual reality technology mainly refers to rendering a visual and audio scenario to simulate, as much as possible, a sensory stimulus from vision and audio in a real world on a user. The virtual reality technology usually requires the user to wear a head mounted display (head mounted display, HMD) to use a simulated visual component to entirely replace to entirely replace a field of view of the user, and requires the user to wear a headset to provide accompanying audio for the user. In addition, in VR, head and action tracking usually needs to be performed on the user, to update simulated visual and audio content in a timely manner, so that the visual and audio content experienced by the user is consistent with an action of the user. The augmented reality technology mainly refers to provision of additional visual or auditory information or artificially generated content in a real environment perceived by the user, where the user may obtain the real environment directly, that is, without intermediate sensing, processing, and rendering, or indirectly, that is, through transfer via a sensor or the like; and performing further enhancement. The mixed reality technology is an advanced form of AR. One of implementations of the mixed reality technology is to insert some virtual elements into a physical scenario, to provide the user with immersive experience in which the elements are a part of the real scenario.

As a new service, a multi-modal service has an additional haptic experience dimension on the basis of XR, so that remote touch and remote control may be implemented, and multifaceted remote perception may be implemented in vision, hearing, haptic sense, kinesthesis, and the like. Therefore, the multi-modal service has great development space in related fields such as industrial automation, medical care, and remote education, provides comprehensive interactive experience for users, and has great application value and business potential. However, in a current data transmission method, when pieces of data of different types (for example, video data and haptic data) are all scheduled, block interference in frequency domain is significant, and data transmission reliability is not high.

## SUMMARY

This application provides a data transmission method and apparatus, to reduce block interference in frequency domain and improve data transmission reliability by transmitting data with different reliability requirements on subcarriers that are distributed at intervals in one transmission block RB.

According to a first aspect, a data transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first indication information; determining a first resource and a second resource based on the first indication information; receiving first data on the first resource; and receiving second data on the second resource. The first resource and the second resource are located in a same resource block RB. The first resource includes at least two subcarriers that are spaced in frequency domain, and/or the second resource includes at least two subcarriers that are spaced in frequency domain.

It should be noted that in embodiments of this application, that the first resource includes at least two subcarriers that are spaced in frequency domain may be understood as follows: The subcarriers in the first resource are discontinuous in frequency domain, or adjacent frequency domain resources that are occupied are spaced by a subcarrier of another resource. For example, a subcarrier #1, a subcarrier #2, a subcarrier #3, and a subcarrier 4# are sequentially arranged adjacent to each other in frequency domain. In this case, the subcarrier 1# and the subcarrier #3 may be considered as two subcarriers that are spaced in frequency domain; the subcarrier 1# and the subcarrier #4 may be considered as two subcarriers that are spaced in frequency domain; the subcarrier 2# and the subcarrier #4 may be considered as two subcarriers that are spaced in frequency domain; the subcarrier 1#, the subcarrier #2, and the subcarrier #4 may be considered as at least two subcarriers that are spaced in frequency domain; and the subcarrier 1#, the subcarrier #3, and the subcarrier #4 may be considered as at least two subcarriers that are spaced in frequency domain. In other words, there is at least one subcarrier that does not belong to the first resource within a frequency domain span range of the first resource. A similar expression in this application may be understood similarly, and details are not described subsequently again.

In a possible implementation, the first indication information may be carried in radio resource control RRC signaling or downlink control information DCI signaling.

According to the solution of this application, in a same RB, different data is distributedly mapped to discontinuous subcarriers in frequency domain for transmission, so that block interference in frequency domain can be reduced, and data transmission reliability can be improved.

With reference to the first aspect, in some implementations of the first aspect, a modulation and coding scheme MCS corresponding to the first data is higher than that corresponding to the second data.

According to the solution of this application, different MCSs are used to transmit data, so that high requirements of some data on reliability and a delay can be met, and a high requirement of other data on a rate can be met.

It should be noted that the MCS corresponding to the first data may be understood as follows: When the first data is transmitted, the data is encoded and modulated for transmission by using the MCS corresponding to the first data. A similar expression in this application may be understood similarly, and details are not described subsequently again.

It should be understood that an MCS index value may be indicated by the RRC signaling, or may be indicated by the DCI signaling.

This implementation may alternatively be expressed as follows: A modulation order corresponding to the first data is equal to that corresponding to the second data, and a target code rate corresponding to the first data is higher than that corresponding to the second data. Alternatively, a modulation order corresponding to the first data is higher than that corresponding to the second data.

It should be understood that the modulation order and the target code rate may be obtained through a table query by using an MCS index value. This is not limited in this application.

With reference to the first aspect, in some implementations of the first aspect, the first data and the second data are respectively from a first data stream and a second data stream of a same multi-modal service.

It should be understood that the first data and the second data correspond to different quality of service flows QoS flows in a same multi-modal protocol data unit PDU session.

With reference to the first aspect, in some implementations of the first aspect, a transmission error rate of the first data stream is lower than that of the second data stream.

According to the solution of this application, in a same RB, data of data streams with different transmission error rates is distributedly mapped to discontinuous subcarriers in frequency domain for transmission. Therefore, a high requirement of data with a low transmission error rate on a rate can be met, and a high requirement of data with a high transmission error rate on reliability can be met. In addition, the block interference in frequency domain can be reduced, and the data transmission reliability can be improved.

With reference to the first aspect, in some implementations of the first aspect, the second resource is located at a same frequency domain position as a demodulation reference signal DMRS in the RB.

It should be understood that the second resource is located after a frequency domain resource of the DMRS, and occupies a same subcarrier as the DMRS.

According to the solution of this application, haptic data is placed on the subcarrier corresponding to the DMRS, to reduce, as much as possible, a transmission error caused by inaccurate channel estimation. In addition, the haptic data is distributedly mapped, so that the block interference in frequency domain can be better avoided.

With reference to the first aspect, in some implementations of the first aspect, the first indication information includes frequency domain start information, and the frequency domain start information indicates starting positions of the first resource and the second resource in frequency domain.

With reference to the first aspect, in some implementations of the first aspect, the first indication information includes period information, and the period information indicates distribution periods of the first resource and the second resource in frequency domain.

With reference to the first aspect, in some implementations of the first aspect, the first indication information includes a continuous length, and the continuous length indicates lengths of the first resource and the second resource in frequency domain.

According to the solution of this application, data transmission is performed by indicating that an interval between frequency domain resources includes a frequency domain offset parameter, a period parameter, and a continuous length parameter, so that data can be distributedly mapped, reducing the block interference in frequency domain and improving the data transmission reliability and flexibility.

According to a second aspect, a data transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending first indication information, where the first indication information indicates a first resource and a second resource; sending first data on the first resource; and sending second data on the second resource. The first resource and the second resource are located in a same resource block RB. The first resource includes at least two subcarriers that are spaced in frequency domain, and/or the second resource includes at least two subcarriers that are spaced in frequency domain.

According to the solution of this application, in a same RB, different data is distributedly mapped to discontinuous subcarriers in frequency domain for transmission, so that block interference in frequency domain can be reduced, and data transmission reliability can be improved.

With reference to the second aspect, in some implementations of the second aspect, a modulation and coding scheme MCS corresponding to the first data is higher than that corresponding to the second data.

According to the solution of this application, different MCSs are used to transmit data, so that high requirements of some data on reliability and a delay can be met, and a high requirement of other data on a rate can be met.

It should be understood that an MCS index value may be indicated by RRC signaling, or may be indicated by DCI signaling.

This implementation may alternatively be expressed as follows: A modulation order corresponding to the first data is equal to that corresponding to the second data, and a target code rate corresponding to the first data is higher than that corresponding to the second data. Alternatively, a modulation order corresponding to the first data is higher than that corresponding to the second data.

It should be understood that the modulation order and the target code rate may be obtained through a table query by using an MCS index value. This is not limited in this application.

With reference to the second aspect, in some implementations of the second aspect, the first data and the second data are respectively from a first data stream and a second data stream of a same multi-modal service.

It should be understood that the first data and the second data correspond to different quality of service flows QoS flows in a same multi-modal protocol data unit PDU session.

With reference to the second aspect, in some implementations of the second aspect, a transmission error rate of the first data stream is lower than that of the second data stream.

According to the solution of this application, in a same RB, data of data streams with different transmission error rates is distributedly mapped to discontinuous subcarriers in frequency domain for transmission. Therefore, a high requirement of data with a low transmission error rate on a rate can be met, and a high requirement of data with a high transmission error rate on reliability can be met. In addition, the block interference in frequency domain can be reduced, and the data transmission reliability can be improved.

With reference to the second aspect, in some implementations of the second aspect, the second resource is located at a same frequency domain position as a demodulation reference signal DMRS in the RB.

It should be understood that the second resource is located after a frequency domain resource of the DMRS, and occupies a same subcarrier as the DMRS.

According to the solution of this application, haptic data is placed on the subcarrier corresponding to the DMRS, to reduce, as much as possible, a transmission error caused by inaccurate channel estimation. In addition, the haptic data is distributedly mapped, so that the block interference in frequency domain can be better avoided.

With reference to the second aspect, in some implementations of the second aspect, the first indication information includes frequency domain start information, and the frequency domain start information indicates starting positions of the first resource and the second resource in frequency domain.

With reference to the second aspect, in some implementations of the second aspect, the first indication information includes period information, and the period information indicates distribution periods of the first resource and the second resource in frequency domain.

With reference to the second aspect, in some implementations of the second aspect, the first indication information includes a continuous length, and the continuous length indicates lengths of the first resource and the second resource in frequency domain.

According to the solution of this application, data transmission is performed by indicating that an interval between frequency domain resources includes a frequency domain offset parameter, a period parameter, and a continuous length parameter, so that data can be distributedly mapped, reducing the block interference in frequency domain and improving the data transmission reliability and flexibility.

According to a third aspect, a data transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving second indication information; determining a third resource and a fourth resource based on the second indication information; receiving third data on the third resource; and receiving fourth data on the fourth resource. The third resource and the fourth resource are located in a same resource block RB. The third resource includes at least two subcarriers that are spaced in frequency domain, and/or the fourth resource includes at least two subcarriers that are spaced in frequency domain.

In a possible implementation, the second indication information may be carried in RRC signaling or DCI signaling.

With reference to the third aspect, in some implementations of the third aspect, a modulation and coding scheme MCS corresponding to the third data is higher than that corresponding to the fourth data.

It should be understood that an MCS index value may be indicated by the RRC signaling, may be indicated by the DCI signaling, or may be carried partially in the RRC signaling and partially in the DCI signaling.

This implementation may alternatively be expressed as follows: A modulation order corresponding to the third data is equal to that corresponding to the fourth data, and a target code rate corresponding to the third data is higher than that corresponding to the fourth data. Alternatively, a modulation order corresponding to the third data is higher than that corresponding to the fourth data.

It should be understood that the modulation order and the target code rate may be obtained through a table query by using an MCS index value. This is not limited in this application.

With reference to the third aspect, in some implementations of the third aspect, the third data and the fourth data are respectively from a third data stream and a fourth data stream of a same multi-modal service.

It should be understood that the third data and the fourth data correspond to different quality of service flows QoS flows in a same multi-modal protocol data unit PDU session.

With reference to the third aspect, in some implementations of the third aspect, a transmission error rate of the third data stream is lower than that of the fourth data stream.

With reference to the third aspect, in some implementations of the third aspect, the fourth resource is located at a same frequency domain position as a demodulation reference signal DMRS in the RB.

It should be understood that the fourth resource is located after a frequency domain resource of the DMRS, and occupies a same subcarrier as the DMRS.

With reference to the third aspect, in some implementations of the third aspect, the second indication information includes frequency domain start information, and the frequency domain start information indicates starting positions of the third resource and the fourth resource in frequency domain.

With reference to the third aspect, in some implementations of the third aspect, the second indication information includes period information, and the period information indicates distribution periods of the third resource and the fourth resource in frequency domain.

With reference to the third aspect, in some implementations of the third aspect, the second indication information includes a continuous length, and the continuous length indicates lengths of the third resource and the fourth resource in frequency domain.

According to a fourth aspect, a data transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending second indication information, where the second indication information indicates a third resource and a fourth resource; sending third data on the third resource; and sending fourth data on the fourth resource. The third resource and the fourth resource are located in a same resource block RB. The third resource includes at least two subcarriers that are spaced in frequency domain, and/or the fourth resource includes at least two subcarriers that are spaced in frequency domain.

With reference to the fourth aspect, in some implementations of the fourth aspect, a modulation and coding scheme MCS corresponding to the third data is higher than that corresponding to the fourth data.

It should be understood that an MCS index value may be indicated by RRC signaling, or may be indicated by DCI signaling.

This implementation may alternatively be expressed as follows: A modulation order corresponding to the third data is equal to that corresponding to the fourth data, and a target code rate corresponding to the third data is higher than that corresponding to the fourth data. Alternatively, a modulation order corresponding to the third data is higher than that corresponding to the fourth data.

It should be understood that the modulation order and the target code rate may be obtained through a table query by using an MCS index value. This is not limited in this application.

With reference to the fourth aspect, in some implementations of the fourth aspect, the third data and the fourth data are respectively from a third data stream and a fourth data stream of a same multi-modal service.

It should be understood that the third data and the fourth data correspond to different quality of service flows QoS flows in a same multi-modal protocol data unit PDU session.

With reference to the fourth aspect, in some implementations of the fourth aspect, a transmission error rate of the third data stream is lower than that of the fourth data stream.

With reference to the fourth aspect, in some implementations of the fourth aspect, the fourth resource is located at a same frequency domain position as a demodulation reference signal DMRS in the RB.

It should be understood that the second resource is located after a frequency domain resource of the DMRS, and occupies a same subcarrier as the DMRS.

With reference to the fourth aspect, in some implementations of the fourth aspect, the second indication information includes frequency domain start information, and the frequency domain start information indicates starting positions of the third resource and the fourth resource in frequency domain.

With reference to the fourth aspect, in some implementations of the fourth aspect, the second indication information includes period information, and the period information indicates distribution periods of the third resource and the fourth resource in frequency domain.

With reference to the fourth aspect, in some implementations of the fourth aspect, the second indication information includes a continuous length, and the continuous length indicates lengths of the third resource and the fourth resource in frequency domain.

According to a fifth aspect, a data transmission apparatus is provided. The apparatus includes: an interface unit, configured to receive first indication information; and

a processing unit, configured to determine a first resource and a second resource based on the first indication information.

The interface unit is further configured to: receive first data on the first resource, and receive second data on the second resource. The first resource and the second resource are located in a same resource block RB. The first resource includes at least two subcarriers that are spaced in frequency domain, and/or the second resource includes at least two subcarriers that are spaced in frequency domain.

With reference to the fifth aspect, in some implementations of the fifth aspect, a modulation and coding scheme MCS corresponding to the first data is higher than that corresponding to the second data.

It should be understood that an MCS index value may be indicated by RRC signaling, or may be indicated by DCI signaling.

With reference to the fifth aspect, in some implementations of the fifth aspect, the first data and the second data are respectively from a first data stream and a second data stream of a same multi-modal service.

It should be understood that the first data and the second data correspond to different quality of service flows QoS flows in a same multi-modal protocol data unit PDU session.

With reference to the fifth aspect, in some implementations of the fifth aspect, a transmission error rate of the first data stream is lower than that of the second data stream.

With reference to the fifth aspect, in some implementations of the fifth aspect, the second resource is located at a same frequency domain position as a demodulation reference signal DMRS in the RB.

It should be understood that the fourth resource is located after a frequency domain resource of the DMRS, and occupies a same subcarrier as the DMRS.

With reference to the fifth aspect, in some implementations of the fifth aspect, the first indication information includes frequency domain start information, and the frequency domain start information indicates starting positions of the first resource and the second resource in frequency domain.

With reference to the fifth aspect, in some implementations of the fifth aspect, the first indication information includes period information, and the period information indicates distribution periods of the first resource and the second resource in frequency domain.

With reference to the fifth aspect, in some implementations of the fifth aspect, the first indication information includes a continuous length, and the continuous length indicates lengths of the first resource and the second resource in frequency domain.

According to a sixth aspect, a data transmission apparatus is provided. The apparatus includes an interface unit, configured to send first indication information, where the first indication information indicates a first resource and a second resource.

The interface unit is further configured to: send first data on the first resource, and send second data on the second resource. The first resource and the second resource are located in a same resource block RB. The first resource includes at least two subcarriers that are spaced in frequency domain, and/or the second resource includes at least two subcarriers that are spaced in frequency domain.

With reference to the sixth aspect, in some implementations of the sixth aspect, a modulation and coding scheme MCS corresponding to the first data is higher than that corresponding to the second data.

It should be understood that an MCS index value may be indicated by RRC signaling, or may be indicated by DCI signaling.

With reference to the sixth aspect, in some implementations of the sixth aspect, the first data and the second data are respectively from a first data stream and a second data stream of a same multi-modal service.

It should be understood that the first data and the second data correspond to different quality of service flows QoS flows in a same multi-modal protocol data unit PDU session.

With reference to the sixth aspect, in some implementations of the sixth aspect, a transmission error rate of the first data stream is lower than that of the second data stream.

With reference to the sixth aspect, in some implementations of the sixth aspect, the second resource is located at a same frequency domain position as a demodulation reference signal DMRS in the RB.

It should be understood that the fourth resource is located after a frequency domain resource of the DMRS, and occupies a same subcarrier as the DMRS.

With reference to the sixth aspect, in some implementations of the sixth aspect, the first indication information includes frequency domain start information, and the frequency domain start information indicates starting positions of the first resource and the second resource in frequency domain.

With reference to the sixth aspect, in some implementations of the sixth aspect, the first indication information includes period information, and the period information indicates distribution periods of the first resource and the second resource in frequency domain.

With reference to the sixth aspect, in some implementations of the sixth aspect, the first indication information includes a continuous length, and the continuous length indicates lengths of the first resource and the second resource in frequency domain.

According to a seventh aspect, a data transmission apparatus is provided. The apparatus includes: an interface unit, configured to receive second indication information; and

a processing unit, configured to determine a third resource and a fourth resource based on the second indication information.

The interface unit is further configured to: receive third data on the third resource, and receive fourth data on the fourth resource. The third resource and the fourth resource are located in a same resource block RB. The third resource includes at least two subcarriers that are spaced in frequency domain, and/or the fourth resource includes at least two subcarriers that are spaced in frequency domain.

With reference to the seventh aspect, in some implementations of the seventh aspect, a modulation and coding scheme MCS corresponding to the third data is higher than that corresponding to the fourth data.

It should be understood that an MCS index value may be indicated by RRC signaling, or may be indicated by DCI signaling.

With reference to the seventh aspect, in some implementations of the seventh aspect, the third data and the fourth data are respectively from a third data stream and a fourth data stream of a same multi-modal service.

It should be understood that the third data and the fourth data correspond to different quality of service flows QoS flows in a same multi-modal protocol data unit PDU session.

With reference to the seventh aspect, in some implementations of the seventh aspect, a transmission error rate of the third data stream is lower than that of the fourth data stream.

With reference to the seventh aspect, in some implementations of the seventh aspect, the fourth resource is located at a same frequency domain position as a demodulation reference signal DMRS in the RB.

It should be understood that the fourth resource is located after a frequency domain resource of the DMRS, and occupies a same subcarrier as the DMRS.

With reference to the seventh aspect, in some implementations of the seventh aspect, the second indication information includes frequency domain start information, and the frequency domain start information indicates starting positions of the third resource and the fourth resource in frequency domain.

With reference to the seventh aspect, in some implementations of the seventh aspect, the second indication information includes period information, and the period information indicates distribution periods of the third resource and the fourth resource in frequency domain.

With reference to the seventh aspect, in some implementations of the seventh aspect, the second indication information includes a continuous length, and the continuous length indicates lengths of the third resource and the fourth resource in frequency domain.

According to an eighth aspect, a data transmission apparatus is provided. The apparatus includes an interface unit, configured to send second indication information, where the second indication information indicates a third resource and a fourth resource.

The interface unit is further configured to: receive third data on the third resource, and receive fourth data on the fourth resource. The third resource and the fourth resource are located in a same resource block RB. The third resource includes at least two subcarriers that are spaced in frequency domain, and/or the fourth resource includes at least two subcarriers that are spaced in frequency domain.

With reference to the eighth aspect, in some implementations of the eighth aspect, a modulation and coding scheme MCS corresponding to the third data is higher than that corresponding to the fourth data.

It should be understood that an MCS index value may be indicated by RRC signaling, or may be indicated by DCI signaling.

With reference to the eighth aspect, in some implementations of the eighth aspect, the third data and the fourth data are respectively from a third data stream and a fourth data stream of a same multi-modal service.

It should be understood that the third data and the fourth data correspond to different quality of service flows QoS flows in a same multi-modal protocol data unit PDU session.

With reference to the eighth aspect, in some implementations of the eighth aspect, a transmission error rate of the third data stream is lower than that of the fourth data stream.

With reference to the eighth aspect, in some implementations of the eighth aspect, the fourth resource is located at a same frequency domain position as a demodulation reference signal DMRS in the RB.

It should be understood that the fourth resource is located after a frequency domain resource of the DMRS, and occupies a same subcarrier as the DMRS.

With reference to the eighth aspect, in some implementations of the eighth aspect, the second indication information includes frequency domain start information, and the frequency domain start information indicates starting positions of the third resource and the fourth resource in frequency domain.

With reference to the eighth aspect, in some implementations of the eighth aspect, the second indication information includes period information, and the period information indicates distribution periods of the third resource and the fourth resource in frequency domain.

With reference to the eighth aspect, in some implementations of the eighth aspect, the second indication information includes a continuous length, and the continuous length indicates lengths of the third resource and the fourth resource in frequency domain.

According to a ninth aspect, a data transmission apparatus is provided. The apparatus may be a terminal device, may be a component (for example, a processor, a chip, or a chip system) of a terminal device, or may be a logical node, a logical module, or software that can implement all or a part of functions of a network device. The apparatus has a function of implementing the first aspect and the possible implementations of the first aspect or the third aspect and the possible implementations of the third aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program and the instructions stored in the storage unit, or instructions from another source, so that the apparatus performs the communication method according to the first aspect and the possible implementations of the first aspect or according to the third aspect and the possible implementations of the third aspect. In this design, the apparatus may be the terminal device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, so that the chip in the network device performs the communication method according to any one of the first aspect and the possible implementations of the first aspect or according to the third aspect and the possible implementations of the third aspect. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the first aspect or the third aspect.

According to a tenth aspect, a data transmission apparatus is provided. The apparatus may be a network device, may be a component (for example, a processor, a chip, or a chip system) of a network device, or may be a logical node, a logical module, or software that can implement all or a part of functions of a network device. The apparatus has a function of implementing the second aspect and the possible implementations of the second aspect or the fourth aspect and the possible implementations of the fourth aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program and the instructions stored in the storage unit, or instructions from another source, so that the apparatus performs the communication method according to the second aspect and the possible implementations of the second aspect or according to the fourth aspect and the possible implementations of the fourth aspect. In this design, the apparatus may be the network device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, so that the chip in the network device performs the communication method according to any one of the second aspect and the possible implementations of the second aspect or according to the fourth aspect and the possible implementations of the fourth aspect. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the second aspect or the fourth aspect.

According to an eleventh aspect, a communication system is provided. The communication system includes the communication device provided in the fifth aspect or the seventh aspect, and the communication apparatus provided in the sixth aspect or the eighth aspect. The communication system may complete the data transmission method according to any one of the first aspect to the fourth aspect or the possible implementations of the first aspect to the fourth aspect.

According to a twelfth aspect, a computer-readable storage medium is provided. The computer-readable storage medium stores a computer program. When the computer program runs on a computer, the computer is caused to execute instructions of the method according to any one of the first aspect to the fourth aspect or the possible implementations of the first aspect to the fourth aspect.

According to a thirteenth aspect, a chip is provided. The chip includes a processing unit. The processing unit may execute instructions to perform the method according to any one of the first aspect to the fourth aspect or the possible implementations of the first aspect to the fourth aspect.

According to a fourteenth aspect, a computer program product is provided. The product includes computer program code. When the computer program code is run, instructions of the method according to any one of the first aspect to the fourth aspect or the possible implementations of the first aspect to the fourth aspect are executed.

According to a fifteenth aspect, a chip system is provided. The chip system includes a memory and a processor. The memory is configured to store instructions. The processor is configured to invoke the instructions from the memory and run the instructions to perform the method according to the first aspect to the fourth aspect and the possible implementations of the first aspect to the fourth aspect.

The chip system may include an input circuit or interface configured to send information or data, and an output circuit or interface configured to receive information or data.

Specifically, for beneficial effects of the other aspects, refer to the beneficial effects described in the first aspect and the second aspect.

**BRIEF DESCRIPTION OF DRAWINGS**

FIG. 1 is a diagram of a possible system applicable to an embodiment of this application;
FIG. 2 is a diagram of service arrival of a haptic signal and a video signal;
FIG. 3 is a diagram in which haptic data occupies a video transmission opportunity;
FIG. 4 is a schematic flowchart of a data transmission method according to an embodiment of this application;
FIG. 5 to FIG. 7 are diagrams of possible haptic data resource mapping according to embodiments of this application;
FIG. 8 is a schematic flowchart of another data transmission method according to an embodiment of this application; and
FIG. 9 to FIG. 11 are schematic block diagrams of several communication apparatuses according to this application.

**DESCRIPTION OF EMBODIMENTS**

The following describes technical solutions of this application with reference to accompanying drawings.

The technical solutions in embodiments of this application may be applied to various communication systems, for example: a global system for mobile communications (global system for mobile communications, GSM); a code division multiple access (code division multiple access, CDMA) system; a wideband code division multiple access (wideband code division multiple access, WCDMA) system; a general packet radio service (general packet radio service, GPRS); an LTE system; an LTE frequency division duplex (frequency division duplex, FDD) system; LTE time division duplex (time division duplex, TDD); a universal mobile telecommunications system (universal mobile telecommunications system, UMTS); a worldwide interoperability for microwave access (worldwide interoperability for microwave access, WiMAX) communication system; a 5th generation (5th generation, 5G) system or an evolved communication system such as new radio (new radio, NR); vehicle-to-everything (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like; long term evolution-vehicle (long term evolution-vehicle, LTE-V); an internet of vehicles; machine type communication (machine type communication, MTC); an internet of things (internet of things, IoT); long term evolution-machine (long term evolution-machine, LTE-M); machine to machine (machine to machine, M2M); and device-to-device (device-to-device, D2D).

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, or a system-on-a-chip (system-on-a-chip, SoC). The chip or the SoC may be installed in a vehicle, an OBU, an RSU, or a T-box.

The terminal device in embodiments of this application further includes at least any one of: user equipment; an augmented reality AR/virtual reality VR/extended reality XR device; a wearable device; a smart appliance terminal; a terminal device and a communication module of the terminal device; a mobile phone and a communication module in the mobile phone; a vehicle and a communication module in the vehicle; an information processing device; a display device; a network apparatus; a base station; a TRP; customer premises equipment (customer premises equipment, CPE); a router; a network access device; and the like. In terms of Uu (UTRAN-to-terminal device) air interface transmission, both parties of wireless communication include a network apparatus and a user communication device. In terms of SL air interface transmission, a receiving end and a transmitting end of wireless communication are both user communication devices. The network apparatus may be a conventional macro base station eNB in a conventional UMTS/LTE wireless communication system, may be a micro base station eNB in a heterogeneous network (heterogeneous network, HetNet) scenario, may be a baseband processing unit (baseband unit, BBU) and a remote radio unit (remote radio unit, RRU) in a distributed base station scenario, may be a baseband pool BBU pool and a radio frequency unit RRU in a CRAN scenario, or may be a gNB in a wireless communication system.

In embodiments of this application, a network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system, for example, an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer.

Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

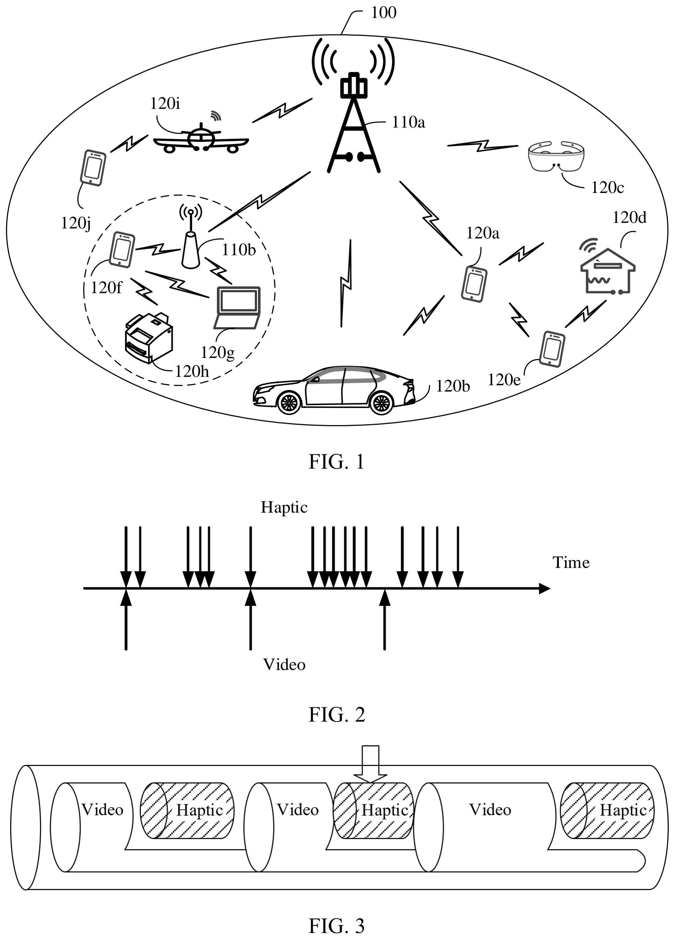

FIG. 1 is a diagram of a possible non-limiting system applicable to an embodiment of this application.

As shown in FIG. 1, a communication system includes a radio access network (radio access network, RAN) 100. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

The RAN node may alternatively be described differently. Unless otherwise specified, in this application, the RAN node is described by using a network device.

It should be understood that FIG. 1 is merely a diagram, and another device that is not shown may be further included. In addition, a quantity of terminal devices and a quantity of network devices included in the communication system are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in this application is not particularly limited in this application, provided that communication can be performed according to the method provided in embodiments of this application by running a program that records code of the method provided in this application. For example, the method provided in embodiments of this application may be performed by a terminal device or a network device, or a functional module that is in a terminal device or a network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable storage medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key driver). In addition, various storage media described in this specification may represent one or more devices and/or other machine-readable media that are configured to store information. The term "machine-readable media" may include but is not limited to a radio channel, and various other media that can store, contain, and/or carry instructions and/or data.

In this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. Information may undergo necessary processing, for example, a format change, between a source end and a destination end for sending of the information. However, the destination end may understand valid information from the source end. A similar expression in this application may be understood similarly, and details are not described herein again.

For ease of understanding of embodiments of this application, concepts and technologies used in embodiments of this application are first briefly described.

It should be understood that related terms and descriptions below are applicable to all embodiments in this specification. Different embodiments may be used independently, or may be used in combination based on some internal or external relationships. Different implementations in embodiments may be used independently or in combination.

1. Demodulation reference signal (dedicated demodulation reference signal, DMRS)

The DMRS is used to estimate an equivalent channel matrix of a data channel or a control channel for data detection and demodulation. For example, the data channel may be a physical downlink shared channel (physical downlink shared channel, PDSCH) or a physical uplink shared channel (physical uplink shared channel, PUSCH). For example, the control channel may be a physical downlink control channel (physical downlink control channel, PDCCH).

The data channel PDSCH is used as an example. Same precoding is usually performed on the DMRS and a sent data signal, to ensure that the DMRS and data pass through a same equivalent channel.

To reduce interference between DMRS resources corresponding to a plurality of DMRS ports, resource mapping may be performed in a manner of frequency division multiplexing, time division multiplexing, or code division multiplexing. In R15, two DMRS resource mapping types (denoted as a type 1 and a type 2) are supported. For a type 1 (Type 1) DMRS, a maximum of eight orthogonal DMRS ports may be supported. For a type 2 (Type 2) DMRS, a maximum of 12 orthogonal DMRS ports may be supported.

Generally, one DMRS port corresponds to one transport stream. For example, for multiple-input multiple-output (multiple-input multiple-output, MIMO) transmission in which a quantity of transport streams is R, a quantity of DMRS ports is R.

2. Code division multiplexing (code division multiplexing, CDM) group

A network device may group DMRS ports into a plurality of CDM groups. DMRS ports in a same CDM group occupy a same time-frequency resource.

A type 1 DMRS is used as an example. For a single-symbol DMRS, in R15, a maximum of four DMRS ports are supported, and a DMRS resource occupies one OFDM symbol. The four DMRS ports are grouped into two code division multiplexing groups (CDM groups), where a CDM group 0 includes a port 0 and a port 1; and a CDM group 1 includes a port 2 and a port 3. The CDM group 0 and the CDM group 1 are frequency division multiplexed. DMRS ports included in the CDM group are mapped to a same time-frequency resource. DMRSs corresponding to the DMRS ports included in the CDM group are distinguished by using an orthogonal cover code (orthogonal cover code, OCC), to ensure orthogonality of the DMRS ports in the CDM group. Specifically, the port 0 and the port 1 are in a same resource element RE, and resource mapping is performed in a comb manner in frequency domain. In other words, adjacent frequency domain resources occupied by the port 0 and the port 1 are spaced by one subcarrier. For one DMRS port, two adjacent occupied REs correspond to one OCC codeword sequence whose length is 2. For example, for a subcarrier 0 and a subcarrier 2, a group of OCC codeword sequences (+1+1 and +1-1) whose lengths are 2 are used for the port 0 and the port 1. Similarly, the port 2 and the port 3 are in a same resource element (RE), and are mapped, in a comb manner in frequency domain, to REs that are not occupied by the port 0 and the port 1. For a subcarrier 1 and a subcarrier 3, a group of OCC codeword sequences (+1+1 and +1-1) whose lengths are 2 are used for the port 2 and the port 3.

3. Haptic signal

Data from different sources or in different forms may be referred to as data of different modalities (modalities). For example, data obtained based on a haptic sense, hearing, and vision of a person is data of three different modalities. Data whose information types are voice, video, text, or the like may also be referred to as data of different modalities. Data from different information acquisition devices, for example, data obtained by using a radar signal and data obtained by an infrared sensor, may also be referred to as data of different modalities. In addition, two pieces of data collected in two different cases may also be referred to as data of two modalities.

FIG. 2 is a diagram of service arrival of a haptic signal and a video signal. As shown in FIG. 2, because encoding and decoding principles for the haptic signal and the video signal are different, traffic features of data packets that are of the haptic signal and the video signal and that need to be transmitted in a network are also different. The haptic signal has different service features before and after encoding. Before encoding, a signal generated by each haptic sensor is periodic, 500 to 2000 packets are generated per second, and a size of each packet ranges from 12 to 48 bytes. After encoding, a signal generated by each haptic sensor arrives randomly, a time interval between two arrivals complies with generalized Pareto distribution, and a size of a packet arriving each time remains unchanged.

It should be understood that although a size of an arriving packet for each channel remains unchanged after encoding, considering a case in which one user simultaneously uses a plurality of haptic sensors, because each sensor generates a signal independently, data arriving at the network per user is uneven. A service model of an XR video transmission service usually involves periodic arrival based on a frame rate. For example, for a video with a frame rate of 60 frames per second (frames per second, FPS), one picture frame arrives at an interval of 16.67 milliseconds in an ideal case. In addition, a size of an XR video frame is much larger than that of a haptic data packet. For example, for a video with 30 Mbps and 60 FPS, a size of a single video frame ranges from 60 to 100 kilobytes.

Due to a difference in human body perception, the haptic signal and the video signal, as signals of two modalities, have different network transmission requirements. Generally, for the video signal, a reliability requirement is 99%, and a delay requirement is 10 ms; and for the haptic signal, a reliability requirement is 99.999%, and a delay requirement is 5 ms. Therefore, different reliability assurances need to be used during transmission at a physical layer. For example, when a TDD configuration is a DDDDU (D represents a downlink slot, and U represents an uplink slot), and a subcarrier spacing is 30 kHz, there is usually only one retransmission opportunity within the delay requirement of 5 ms for haptics, and in this case, an initial block error rate (initial block error rate, iBLER) at the physical layer may be set to 1%, so that the transmission reliability requirement of 99.999% may be met through one retransmission and accumulation of a combination gain; and there may usually be two or three retransmission opportunities within the delay requirement of 10 ms for videos, and in this case, an initial block error rate iBLER at the physical layer may be set to 10%. Different iBLERs at the physical layer affect a selected modulation and coding scheme (modulation and coding scheme, MCS) in a sending process.

4. Modulation and coding scheme

Table 1 is a possible defined MCS table. Generally, a larger value of an iBLER indicates a larger index value of a selected MCS.

The MCS table may include an MCS index, a modulation order, and a target code rate. When an MCS index is obtained, a modulation order and a target code rate corresponding to the MCS index may be determined based on the MCS index in the table, for example, Table 1. It should be understood that Table 1 is one type of MCS table, and the MCS table is not limited in embodiments of this application.

Table 1. MCS index correspondence table

| MCS index (MCS Index) | Modulation order (Modulation Order) | Target code rate R (Code rate R)×1024 | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved value (reserved) | |
| 30 | 4 | Reserved value | |
| 31 | 6 | Reserved value | |

In an NR system, only one transmission block (transmission block, TB) can be scheduled by using one piece of downlink control information (downlink control information, DCI), and one MCS index value is used for the entire transmission block. Because a video signal and a haptic signal have different reliability requirements, different MCS index values need to be used for transmission at a physical layer.

In a possible implementation, the haptic signal and the video signal are scheduled in different slots. For example, when a TDD slot configuration is DDDSU, and a subcarrier spacing is 30 kHz, in a downlink scenario, a typical quantity of haptic transmitters per user is 60, including 40 in a haptic vest and 20 in a pair of haptic gloves. In this case, haptic arrivals occur in almost all slots within a packet delay budget (packet delay budget, PDB) of a video.

FIG. 3 is a diagram in which haptic data occupies a video transmission opportunity. It should be understood that in the PDB of the video, the haptic signal frequently occupies a sending opportunity of the video, and consequently, the video signal cannot be transmitted in the specified PDB.

In another possible implementation, the video signal is transmitted based on the reliability requirement for haptics as well. It should be understood that a capacity of an XR service is tested according to iBLER=10% (commonly used physical layer transmission reliability) or iBLER=1% (transmission reliability used when one retransmission is allowed to be performed on the haptic signal). When a service rate is 30 Mbps, a capacity of an XR service for which data transmission is performed according to iBLER=1% is 21.1% lower than a capacity of an XR service for which data transmission is performed according to iBLER=10%. When the service rate is 20 Mbps, the capacity of the XR service for which data transmission is performed according to iBLER=1% is 30.2% lower than the capacity of the XR service for which data transmission is performed according to iBLER=10%.

Consequently, if the video signal is transmitted based on the reliability requirement of the haptic signal, a service capacity of the video is reduced to 20% to 30%.

In this case, in the foregoing implementations, block interference in frequency domain in data transmission is significant, data transmission reliability is not high, and video data and haptic data cannot be both efficiently scheduled. In other words, high requirements of the haptic data on reliability and a delay cannot be ensured, and a high requirement of the video data on a rate cannot be met either. This deteriorates user experience.

To resolve the foregoing problem, this application provides a data transmission method and apparatus, to improve data transmission reliability. In addition, the high requirement of the video data on the rate can be further met, improving user experience.

It may be understood that in a diagram of the method in this application, an example in which a network device and a terminal device are execution bodies of interaction illustration is used to illustrate the method. However, the execution bodies of the interaction illustration are not limited in this application. For example, the network device in the figure may alternatively be a module (for example, a chip, a chip system, or a processor) used in the network device, or may be a logical node, a logical module, or software that can implement all or a part of functions of the network device. The terminal device in the figure may alternatively be a module (for example, a chip, a chip system, or a processor) used in the terminal device, or may be a logical node, a logical module, or software that can implement all or a part of functions of the terminal device.

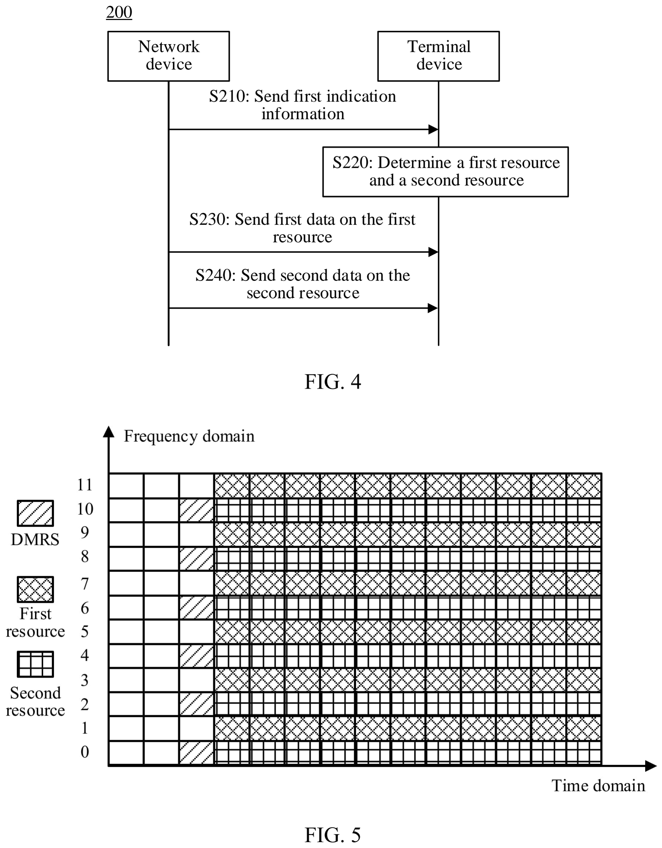

FIG. 4 is a schematic flowchart of a data transmission method according to an embodiment of this application.

The method 200 is shown in FIG. 4. The method includes at least the following steps.

S210: A network device sends first indication information. Correspondingly, a terminal device receives the first indication information.

The first indication information indicates a first resource and a second resource.

In a possible implementation, the first indication information may be carried in RRC signaling, may be carried in DCI signaling, or may be partially carried in RRC signaling and partially carried in DCI signaling.

S220: The terminal device determines the first resource and the second resource based on the first indication information.

The first indication information may directly indicate a time-frequency domain position of the first resource and a time-frequency domain position of the second resource. Alternatively, the first indication information may directly indicate a time-frequency domain position of the first resource, and the terminal device may determine the time-frequency domain position of the first resource and a time-frequency domain position of the second resource based on the time-frequency domain position of the first resource. Alternatively, the first indication information may directly indicate a time-frequency domain position of the second resource, and the terminal device may determine a time-frequency domain position of the first resource and the time-frequency domain position of the second resource based on the time-frequency domain position of the second resource. A specific indication manner of the first indication information is not limited in this application.

The first resource and the second resource are located in a same RB. The first resource includes at least two subcarriers that are spaced in frequency domain, and/or the second resource includes at least two subcarriers that are spaced in frequency domain.

S230: The network device sends first data on the first resource. Correspondingly, the terminal device receives the first data on the first resource.

S240: The network device sends second data on the second resource. Correspondingly, the terminal device receives the second data on the second resource.

It should be understood that in embodiments of this application, sequence numbers of the foregoing processes do not mean execution sequences. The execution sequences of the processes should be determined based on functions and internal logic of the processes, and should not be construed as any limitation on the implementation processes of embodiments of this application. For example, S230 and S240 may be understood as two independent steps, and an execution sequence of the two steps is not limited in this application.

The first data and the second data are respectively from a first data stream and a second data stream of a same multi-modal service.

A transmission error rate of the first data stream is lower than that of the second data stream.

In embodiments of this application, the transmission error rate may be understood as a packet error rate (packet error rate, PER), which is a proportion of packets that are not correctly received by a peer layer (for example, an RLC layer or an IP layer) of a receiver after the packets are sent in a transmission phase. Alternatively, the transmission error rate may be understood as an error rate of a data unit at an application layer. For example, in video encoding, a data frame is usually used as a unit. In this case, the packet error rate may be equivalent to a frame error rate of the application layer.

For example, the first data may be video data, and the second data may be haptic data. Generally, for transmission of the video data, a reliability requirement is 99%, and a delay requirement is 10 ms; and for transmission of the haptic data, a reliability requirement is 99.999%, and a delay requirement is 5 ms. Therefore, different reliability assurances need to be used during transmission at a physical layer.

For example, there is usually only one retransmission opportunity within the delay requirement of 5 ms for transmission of the haptic data, and in this case, an iBLER at the physical layer may be set to 1%, so that the transmission reliability requirement of 99.999% may be met through one retransmission and accumulation of a combination gain; and there may usually be two or three retransmission opportunities within the delay requirement of 10 ms for transmission of the video data, and in this case, an iBLER at the physical layer may be set to 10%.

To ensure high requirements of the haptic data on reliability and a delay and a high requirement of the video data on a rate, an MCS corresponding to the first data is higher than that corresponding to the second data.

In other words, in a first modulation order and a first target code rate that correspond to the first data, and a second modulation order and a second target code rate that correspond to the second data, the first modulation order is equal to the second modulation order, and the first target code rate is higher than the second target code rate; or the first modulation order is higher than the second modulation order.

It should be understood that in this application, that data corresponds to a modulation order and a target code rate may be understood as that the to-be-sent data is modulated and encoded by using the corresponding modulation order and the target code rate, and then is sent.

The modulation order and the target code rate corresponding to the data may be determined by using an MCS index value. The MCS index value may be indicated by the RRC signaling, or may be indicated by the DCI signaling. In other words, the MCS may be indicated by the first indication information.

For example, the MCS index value may be indicated by an MCSAndTBS field configured in the RRC signaling. A value indicated by MCSAndTBS may be, for example, a value of the MCS index, namely, an MCS index value, in Table 1, or may be an MCS index value in another table. It can be learned through table lookup that modulation orders indicated by different MCS index values may be the same, but target code rates are different, and decrease as the MCS index values increase.

The first resource and the second resource may be located in a same slot. A resource in this application may be a time domain resource, a frequency domain resource, or a time-frequency resource. A scheduling granularity of a physical sidelink control channel PSCCH or a physical sidelink shared channel PSSCH has a unit of one slot in time domain, and is measured in a unit of one or more continuous subchannels in frequency domain. The terminal device may send sidelink information on the resource. One resource may carry three types of channels, namely, a PSCCH, a PSSCH, and a physical sidelink feedback channel (physical sidelink feedback channel, PSFCH), and signals such as a demodulation reference signal DMRS and a channel state information reference signal (channel state information reference signal, CSI-RS). The time domain resource includes a symbol (symbol), a slot (slot), a mini-slot (mini-slot), a partial slot (partial slot), a subframe (subframe), a radio frame (frame), a sensing slot (sensing slot), and the like. The frequency domain resource includes a resource element (resource element, RE), a resource block RB, an RB set (set), a subchannel (subchannel), a bandwidth part (bandwidth part, BWP), a carrier (carrier), a channel (channel), an interlace (interlace), and the like.

Because a haptic signal has a high requirement on reliability, to better ensure demodulation reliability, a position of the second resource may be designed to ensure transmission reliability.

In a possible implementation, the second resource is located at a same frequency domain position as a demodulation reference signal DMRS in the RB. In other words, the second resource is located in a same subcarrier as the demodulation reference signal DMRS.

It should be understood that the 3GPP specifies two configuration types for a PDSCH DMRS: a type 1 and a type 2. For the type 1, DMRS REs are distributed at intervals in frequency domain in a symbol, and a density is 50%. For the type 2, every two DMRS REs are connected together at an interval of four REs, and a density is 33.3%.

When a type of the DMRS is configured as the type 1, a TB of the second data is mapped, starting from a lowest VRB, to a $k^{th}$ RE (that is, an RE included in the second resource), where k satisfies the following condition:

$$k = 4n + 2k' + \Delta \qquad (1)$$

$k'$=0 or 1. $n$=0, 1, 2, .... $\Delta$ is related to a code division multiplexing group CDM group configured for the DMRS. Specifically, when the CDM group is 0, $\Delta$=0; or when the CDM group is 1, $\Delta$=1.

FIG. 5 is a diagram of possible haptic data resource mapping when a type of a DMRS is configured as the type 1.

As shown in FIG. 5, when the CDM group is 0, $\Delta$=0. In this case, $k = 4n + 2k'$, and a frequency domain position k of each RE is determined.

If n=0, and $k'$=0, $k = 4n + 2k' = 0$; by analogy,

if $n$=0, and $k'$=1, $k = 4n + 2k' = 2$;
if $n$=1, and $k'$=0, $k = 4n + 2k' = 4$;
if $n$=1, and $k'$=1, $k = 4n + 2k' = 6$;
if $n$=2, and $k'$=0, $k = 4n + 2k' = 8$; and
if $n$=2, and $k'$=1, $k = 4n + 2k' = 10$.

In a possible implementation, if a double-symbol DMRS or DMRS-additionalPosition is configured, a corresponding RE position needs to be skipped for the second resource.

In a possible implementation, because the density of the DMRS type 1 is larger, a maximum amount of haptic data that may be transmitted in each slot is determined based on traffic of a haptic service, to limit mapping of a haptic TB only to a part of frequency domain resources allocated.

When a type of the DMRS is configured as the type 2, a TB of the second data is mapped starting from a lowest VRB to a $k^{th}$ RE, where k satisfies the following condition:

$$k = 6n + k' + \Delta \qquad (2)$$

k'=0 or 1. n=0, 1, 2, .... $\Delta$ is related to a code division multiplexing group CDM group configured for the DMRS. Specifically, when the CDM group is 0, $\Delta$=0; or when the CDM group is 1, $\Delta$=1.

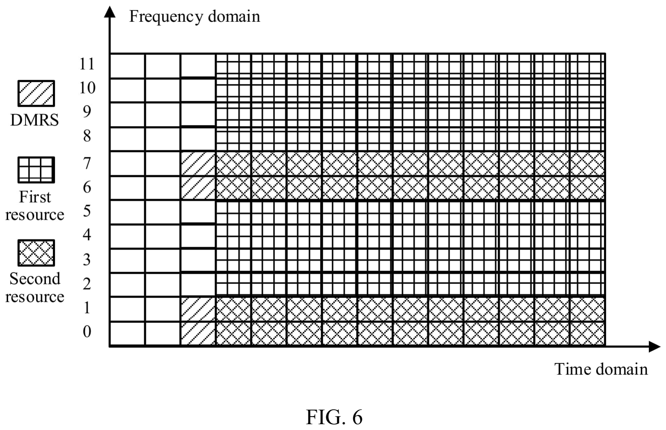

FIG. 6 is a diagram of possible haptic data resource mapping when a type of a DMRS is configured as the type 2.

As shown in FIG. 6, when the CDM group is 0, $\Delta$=0. In this case, $k = 6n + k'$, and a frequency domain position k of each RE is determined.

If n=0, and $k'$=0, $k = 6n + k' = 0$; by analogy,

if $n$=0, and $k'$=1, $k = 6n + k' = 1$;
if $n$=1, and $k'$=0, $k = 6n + k' = 6$; and
if $n$=1, and $k'$=1, $k = 6n + k' = 7$.

In a possible implementation, if a double-symbol DMRS or DMRS-additionalPosition is configured, a corresponding RE position needs to be skipped for the second resource.

According to this embodiment provided in this application, data of different modalities is transmitted by using different MCSs, and the haptic data is placed on the subcarrier corresponding to the DMRS, so that a transmission error caused by inaccurate channel estimation is reduced. In addition, distributed mapping can reduce block interference in frequency domain, and improve data transmission reliability.

In the foregoing embodiment, a subcarrier to which a TB of the haptic data is mapped is at a same position as the subcarrier of the configured DMRS. The following embodiment provides a more flexible manner, that is, the network device may perform resource mapping on the TB of the haptic data by configuring frequency domain resources of a specific data amount as an interval.

In a possible implementation, the first indication information may include frequency domain start information, and the frequency domain start information indicates starting positions of the first resource and the second resource in frequency domain.

In a possible implementation, the first indication information includes period information, and the period information indicates distribution periods of the first resource and the second resource in frequency domain.

In a possible implementation, the first indication information includes a continuous length, and the continuous length indicates lengths of the first resource and the second resource in frequency domain.

For example, the following signaling is added to the RRC signaling for the haptic TB:

frequency domain offset (offset) of a starting position of resource mapping on the TB relative to the lowest VRB: a unit may be an RE or an RB, and this parameter represents an offset value of the starting resource position of mapping on the TB relative to the lowest VRB of a resource scheduled and allocated to a user;

a period (period) of resource mapping on the TB: a unit may be an RE or an RB, and this parameter represents that resource mapping positions of the TB are distributed in a specific period; and

a continuous length (duration) of resource mapping on the TB: a unit may be an RE or an RB, and this parameter represents a length of resources to which the TB is continuously mapped in one period.

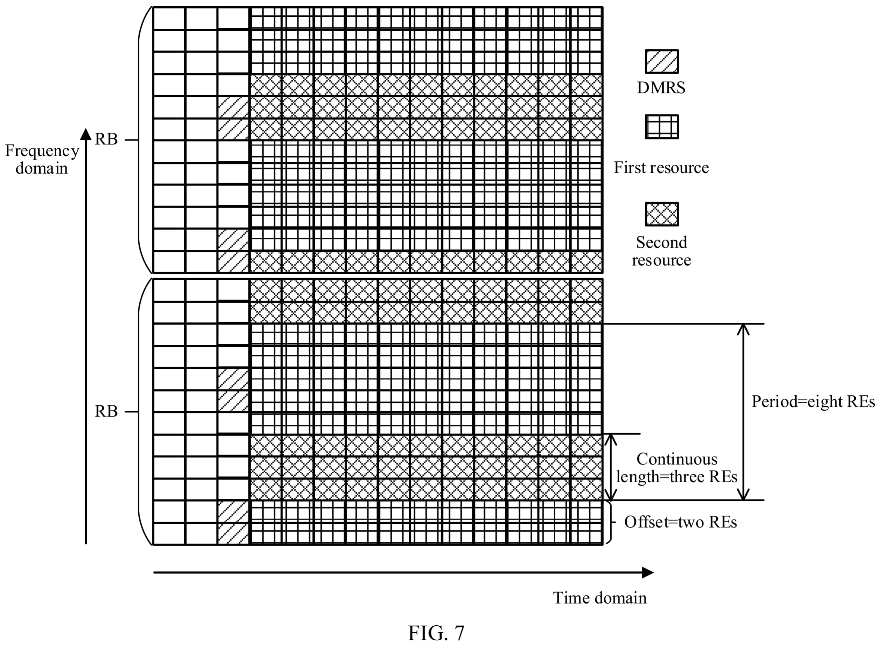

FIG. 7 is a diagram of possible resource mapping according to an embodiment of this application.

As shown in FIG. 7, when the frequency domain start information (offset) is two REs, the period information is eight REs, and the continuous length is three REs, distribution of the first resource and the second resource is shown in the figure.

According to this embodiment provided in this application, data of different modalities is transmitted by using different MCSs; and resource mapping is performed by configuring a frequency domain resource of a data amount of the TB as an interval, including the frequency domain offset parameter, the period parameter, and the continuous length parameter. The haptic data is distributedly mapped, so that the block interference in frequency domain can be reduced, and the data transmission reliability can be improved.

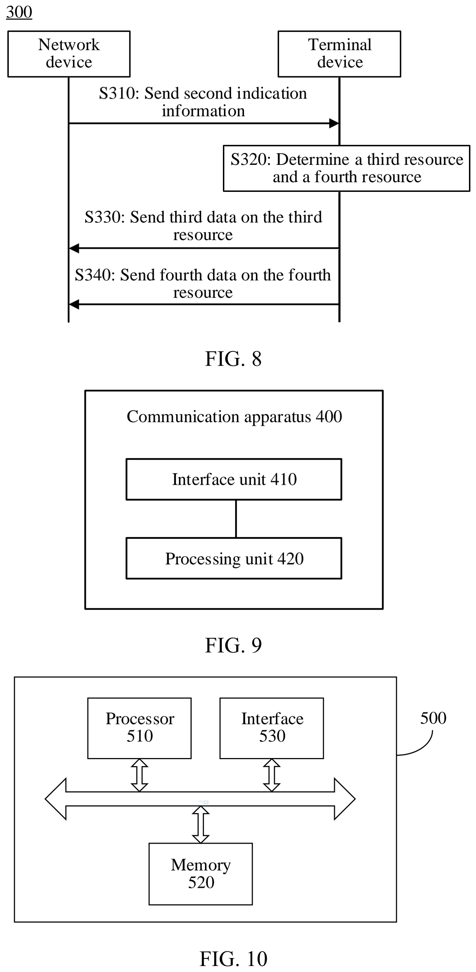

FIG. 8 is a schematic flowchart of another data transmission method according to an embodiment of this application.

The method 300 is shown in FIG. 8. The method includes at least the following steps.

S310: The network device sends second indication information. Correspondingly, the terminal device receives the second indication information.

The second indication information indicates a third resource and a fourth resource.

In a possible implementation, the second indication information may be carried in RRC signaling, may be carried in DCI signaling, or may be partially carried in RRC signaling and partially carried in DCI signaling.

S320: The terminal device determines the third resource and the fourth resource based on the second indication information.

The third resource and the fourth resource are located in a same RB. The third resource includes at least two subcarriers that are spaced in frequency domain, and/or the fourth resource includes at least two subcarriers that are spaced in frequency domain.

S330: The terminal device sends third data on the third resource. Correspondingly, the network device receives the third data on the third resource.

S340: The terminal device sends fourth data on the fourth resource. Correspondingly, the network device receives the fourth data on the fourth resource.

It should be understood that S330 and S340 may be understood as two independent steps, and an execution sequence of the two steps is not limited in this application.

The third data and the fourth data are respectively from a third data stream and a fourth data stream of a same multi-modal service.

A transmission error rate of the third data stream is lower than that of the fourth data stream.

To ensure high requirements of haptic data on reliability and a delay and a high requirement of video data on a rate, an MCS corresponding to the third data is higher than that corresponding to the fourth data.

In other words, in a third modulation order and a third target code rate that correspond to the third data, and a fourth modulation order and a fourth target code rate that correspond to the fourth data, the third modulation order is equal to the fourth modulation order, and the third target code rate is higher than the fourth target code rate; or the third modulation order is higher than the fourth modulation order.

The third resource and the fourth resource may be located in a same slot.

Because a haptic signal has a high requirement on reliability, to better ensure demodulation reliability, a position of the fourth resource may be designed to ensure transmission reliability.

In a possible implementation, the fourth resource is located at a same frequency domain position as a demodulation reference signal DMRS in the RB. In other words, the fourth resource is located in a same subcarrier as the demodulation reference signal DMRS.

In the foregoing embodiment, a subcarrier to which a TB of the haptic data is mapped is at a same position as the subcarrier of the configured DMRS. The following embodiment provides a more flexible manner, that is, the network device may perform resource mapping on the TB of the haptic data by configuring frequency domain resources of a specific data amount as an interval.

In a possible implementation, the second indication information may include frequency domain start information, and the frequency domain start information indicates starting positions of the third resource and the fourth resource in frequency domain.

In a possible implementation, the second indication information includes period information, and the period information indicates distribution periods of the third resource and the fourth resource in frequency domain.

In a possible implementation, the second indication information includes a continuous length, and the continuous length indicates lengths of the third resource and the fourth resource in frequency domain.

For example, the following signaling is added to the RRC signaling for the haptic TB:

a frequency domain offset (offset) of starting of mapping on the TB: a unit may be an RE or an RB, and this parameter represents an offset value of a starting resource position of mapping on the TB relative to a lowest VRB of a resource scheduled and allocated to a user;

a period (period) of resource mapping on the TB: a unit may be an RE or an RB, and this parameter represents that resource mapping positions of the TB are distributed in a specific period; and

a continuous length (duration) of resource mapping on the TB: a unit may be an RE or an RB, and this parameter represents a length of resources to which the TB is continuously mapped in one period.

The embodiment of the method 300 is an uplink data transmission method, which is similar to a downlink data transmission method in the embodiment of the method 200. A resource mapping manner and beneficial effects in the method 300 are basically similar to those in the method 200. For details, refer to the descriptions in the embodiment of the method 200.

According to the foregoing methods, FIG. 9 is a diagram of a wireless communication apparatus 400 according to an embodiment of this application.

As shown in the figure, the communication apparatus 400 may include an interface unit 410 and a processing unit 420.

In a possible design, the communication apparatus 400 may correspond to the terminal device in the foregoing method embodiments.

For example, the communication apparatus 400 may correspond to the terminal device in the method 200 according to embodiments of this application. The interface unit 410 in the communication apparatus 400 is configured to receive first indication information.

The processing unit 420 in the communication apparatus 400 is configured to determine a first resource and a second resource based on the first indication information.

The interface unit 410 in the apparatus 400 is further configured to: receive first data on the first resource, and receive second data on the second resource. The first resource and the second resource are located in a same resource block RB. The first resource includes at least two subcarriers that are spaced in frequency domain, and/or the second resource includes at least two subcarriers that are spaced in frequency domain.

A modulation and coding scheme MCS corresponding to the first data is higher than that corresponding to the second data.

The first data and the second data are respectively from a first data stream and a second data stream of a same multi-modal service.

A transmission error rate of the first data stream is lower than that of the second data stream.

In a possible implementation, the second resource is located at a same frequency domain position as a demodulation reference signal DMRS in the RB.

In a possible implementation, the first indication information includes frequency domain start information, and the frequency domain start information indicates starting positions of the first resource and the second resource in frequency domain.

In a possible implementation, the first indication information includes period information, and the period information indicates distribution periods of the first resource and the second resource in frequency domain.

In a possible implementation, the first indication information includes a continuous length, and the continuous length indicates lengths of the first resource and the second resource in frequency domain.

The interface unit 410 in the communication apparatus 400 performs receiving and sending operations performed by the terminal device in the foregoing method embodiments, and the processing unit 420 performs operations other than the receiving and sending operations.

For example, the communication apparatus 400 may correspond to the terminal device in the method 300 according to embodiments of this application. The interface unit 410 in the communication apparatus 400 is configured to receive second indication information.

The processing unit 420 in the communication apparatus 400 is configured to determine a third resource and a fourth resource based on the second indication information.

The interface unit 410 in the apparatus 400 is further configured to: receive third data on the third resource, and receive fourth data on the fourth resource. The third resource and the fourth resource are located in a same resource block RB. The third resource includes at least two subcarriers that are spaced in frequency domain, and/or the fourth resource includes at least two subcarriers that are spaced in frequency domain.

A modulation and coding scheme MCS corresponding to the third data is higher than that corresponding to the fourth data.

The third data and the fourth data are respectively from a third data stream and a fourth data stream of a same multi-modal service.

A transmission error rate of the third data stream is lower than that of the fourth data stream.

In a possible implementation, the fourth resource is located at a same frequency domain position as a demodulation reference signal DMRS in the RB.

In a possible implementation, the second indication information includes frequency domain start information, and the frequency domain start information indicates starting positions of the third resource and the fourth resource in frequency domain.

In a possible implementation, the second indication information includes period information, and the period information indicates distribution periods of the third resource and the fourth resource in frequency domain.

In a possible implementation, the second indication information includes a continuous length, and the continuous length indicates lengths of the third resource and the fourth resource in frequency domain.

The interface unit 410 in the communication apparatus 400 performs receiving and sending operations performed by the terminal device in the foregoing method embodiments, and the processing unit 420 performs operations other than the receiving and sending operations.

In another possible design, the communication apparatus 400 may correspond to the network device (or a base station or a gNB) in the foregoing method embodiments.

For example, the communication apparatus 400 may correspond to the network device in the method 200 according to embodiments of this application. The interface unit in the communication apparatus 400 may include a sending unit. The interface unit 410 in the communication apparatus 400 is configured to send first indication information, where the first indication information indicates a first resource and a second resource.

The interface unit 410 in the apparatus 400 is further configured to: send first data on the first resource, and send second data on the second resource. The first resource and the second resource are located in a same resource block RB. The first resource includes at least two subcarriers that are spaced in frequency domain, and/or the second resource includes at least two subcarriers that are spaced in frequency domain.

A modulation and coding scheme MCS corresponding to the first data is higher than that corresponding to the second data.

The first data and the second data are respectively from a first data stream and a second data stream of a same multi-modal service.

A transmission error rate of the first data stream is lower than that of the second data stream.

In a possible implementation, the second resource is located at a same frequency domain position as a demodulation reference signal DMRS in the RB.

In a possible implementation, the first indication information includes frequency domain start information, and the frequency domain start information indicates starting positions of the first resource and the second resource in frequency domain.

In a possible implementation, the first indication information includes period information, and the period information indicates distribution periods of the first resource and the second resource in frequency domain.

In a possible implementation, the first indication information includes a continuous length, and the continuous length indicates lengths of the first resource and the second resource in frequency domain.

The interface unit 410 in the communication apparatus 400 performs receiving and sending operations performed by the network device in the foregoing method embodiments, and the processing unit 420 performs operations other than the receiving and sending operations.

For example, the communication apparatus 400 may correspond to the network device in the method 300 according to embodiments of this application. The interface unit 410 in the communication apparatus 400 is configured to send second indication information, where the second indication information indicates a third resource and a fourth resource.

The interface unit 410 in the apparatus 400 is further configured to: receive third data on the third resource, and receive fourth data on the fourth resource. The third resource and the fourth resource are located in a same resource block RB. The third resource includes at least two subcarriers that are spaced in frequency domain, and/or the fourth resource includes at least two subcarriers that are spaced in frequency domain.

A modulation and coding scheme MCS corresponding to the third data is higher than that corresponding to the fourth data.

The third data and the fourth data are respectively from a third data stream and a fourth data stream of a same multi-modal service.

A transmission error rate of the third data stream is lower than that of the fourth data stream.

In a possible implementation, the fourth resource is located at a same frequency domain position as a demodulation reference signal DMRS in the RB.

In a possible implementation, the second indication information includes frequency domain start information, and the frequency domain start information indicates starting positions of the third resource and the fourth resource in frequency domain.

In a possible implementation, the second indication information includes period information, and the period information indicates distribution periods of the third resource and the fourth resource in frequency domain.

In a possible implementation, the second indication information includes a continuous length, and the continuous length indicates lengths of the third resource and the fourth resource in frequency domain.

The interface unit 410 in the communication apparatus 400 performs receiving and sending operations performed by the network device in the foregoing method embodiments, and the processing unit 420 performs operations other than the receiving and sending operations.

According to the foregoing methods, FIG. 10 is a diagram of a communication apparatus 500 according to an embodiment of this application. As shown in FIG. 10, the apparatus 500 may be a terminal device, or may be a network device.

The apparatus 500 may include a processor 510 (that is, an example of a processing unit) and a memory 520. The memory 520 is configured to store instructions. The processor 510 is configured to execute the instructions stored in the memory 520, so that the apparatus 500 implements the steps performed by the terminal device or the network device in the method 200 or the method 300.

Further, the apparatus 500 may further include an interface 530 (that is, an example of a receiving unit module). Further, the processor 510, the memory 520, and the interface 530 may communicate with each other through an internal connection path, to transfer a control signal and/or a data signal. The memory 520 is configured to store a computer program. The processor 510 may be configured to invoke the computer program from the memory 520 and run the computer program, to control the interface 530 to receive a signal or send a signal, to complete the steps performed by the terminal device or the network device in the foregoing methods. The memory 520 may be integrated into the processor 510, or may be separated from the processor 510.

In a possible implementation, if the communication apparatus 500 is a communication device, the interface 530 is a receiver or a transmitter. The receiver and the transmitter may be a same physical entity or different physical entities. When the receiver and the transmitter are a same physical entity, the receiver and the transmitter may be collectively referred to as a transceiver.

In a possible implementation, if the communication apparatus 500 is a chip or a circuit, the interface 530 is an input interface, or the interface 530 is an output interface.

In an implementation, it may be considered that a function of the interface 530 is implemented by using a transceiver circuit or a dedicated transceiver chip. It may be considered that the processor 510 is implemented by using a dedicated processing chip, a processing circuit, a processor, or a general-purpose chip.

In another implementation, it may be considered that a communication device provided in this embodiment of this application is implemented by using a general-purpose computer. To be specific, program code for implementing functions of the processor 510 and the interface 530 is stored in the memory 520, and the general-purpose processor implements the functions of the processor 510 and the interface 530 by executing the code in the memory 520.

For concepts, explanations, detailed descriptions, and other steps of the apparatus 500 that are related to the technical solutions provided in embodiments of this application, refer to the descriptions of the content in the foregoing methods or other embodiments. Details are not described herein again.

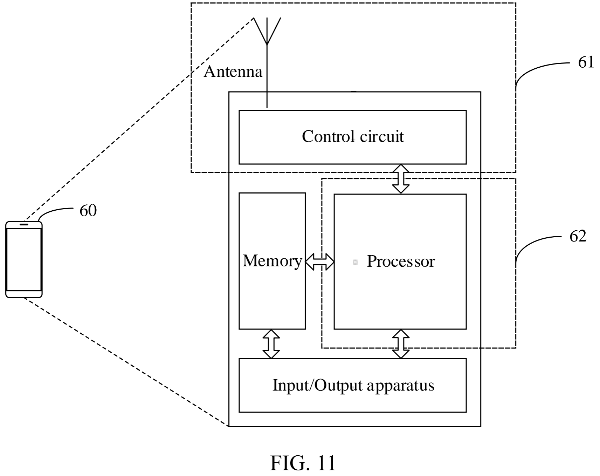

FIG. 11 is a diagram of a structure of a terminal device 60 according to this application. For ease of description, FIG. 11 shows only main components of the communication apparatus. As shown in FIG. 11, the terminal device 60 includes a processor, a memory, a control circuit, an antenna, and an input/output apparatus.

The processor is mainly configured to: process a communication protocol and communication data, control the entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor may read the software program in the storage unit, explain and execute the instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data.

A person skilled in the art may understand that for ease of description, FIG. 11 shows only one memory and one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and the components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

As shown in FIG. 11, the terminal device 60 includes an interface unit 61 and a processing unit 62. The interface unit may also be referred to as a transceiver, a transceiver machine, a transceiver apparatus, or the like. Optionally, a component configured to implement a receiving function in the interface unit 61 may be considered as a receiving unit, and a component configured to implement a sending function in the interface unit 61 may be considered as a sending unit. In other words, the interface unit 61 includes the receiving unit and the sending unit. For example, the receiving unit may also be referred to as a receiver, a receive machine, or a receiving circuit, and the sending unit may also be referred to as a transmitter, a transmit machine, or a transmitting circuit.

The terminal device shown in FIG. 11 may perform the actions performed by the terminal device in the method 200 or the method 300. To avoid repetition, detailed descriptions thereof are omitted herein.

An embodiment of this application further provides a computer-readable storage medium. The computer-readable storage medium stores computer instructions used to implement the method performed by the network device in the foregoing method embodiments.

For example, when a computer program is executed by a computer, the computer is caused to implement the method performed by the network device in the foregoing method embodiments.

An embodiment of this application further provides a computer program product including instructions. When the instructions are executed by a computer, the computer is caused to implement the method performed by the terminal device or the method performed by the network device in the foregoing method embodiments.

An embodiment of this application further provides a communication system. The communication system includes the network device in the foregoing embodiments.

For explanations and beneficial effect of related content of any one of the apparatuses provided above, refer to the corresponding method embodiment provided above. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware, firmware, or any combination thereof. When software is used to implement the foregoing embodiments, all or a part of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. A part or all of the units may be selected based on actual requirements to achieve the objectives of the solutions of embodiments. In addition, functional units in embodiments of this application may be integrated into one processing unit, each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

   receiving first indication information;
   determining a first resource and a second resource based on the first indication information;
   receiving first data on the first resource; and
   receiving second data on the second resource, wherein
   the first resource and the second resource are located in a same resource block RB, and the first resource comprises at least two subcarriers that are spaced in frequency domain, and/or the second resource comprises at least two subcarriers that are spaced in frequency domain.

2. The method according to claim 1, wherein a modulation and coding scheme MCS corresponding to the first data is higher than that corresponding to the second data.

3. The method according to claim 1 or 2, wherein the first data and the second data are respectively from a first data stream and a second data stream of a same multi-modal service.

4. The method according to claim 3, wherein a transmission error rate of the first data stream is lower than that of the second data stream.

5. The method according to any one of claims 1 to 4, wherein the second resource is located at a same frequency domain position as a demodulation reference signal DMRS in the RB.

6. A data transmission method, comprising:

   sending first indication information, wherein the first indication information indicates a first resource and a second resource;
   sending first data on the first resource; and
   sending second data on the second resource, wherein
   the first resource and the second resource are located in a same resource block RB, and the first resource comprises at least two subcarriers that are spaced in frequency domain, and/or the second resource comprises at least two subcarriers that are spaced in frequency domain.

7. The method according to claim 6, wherein a modulation and coding scheme MCS corresponding to the first data is higher than that corresponding to the second data.

8. The method according to claim 6 or 7, wherein the first data and the second data are respectively from a first data stream and a second data stream of a same multi-modal service.

9. The method according to claim 8, wherein a transmission error rate of the first data stream is lower than that of the second data stream.

10. The method according to any one of claims 6 to 9, wherein the second resource is located at a same frequency domain position as a demodulation reference signal DMRS in the RB.

11. A data transmission method, comprising:

    receiving second indication information;
    determining a third resource and a fourth resource based on the second indication information;
    sending third data on the third resource; and
    sending fourth data on the fourth resource, wherein
    the third resource and the fourth resource are located in a same resource block RB, and the third resource comprises at least two subcarriers that are spaced in frequency domain, and/or the fourth resource comprises at least two subcarriers that are spaced in frequency domain.

12. The method according to claim 11, wherein a modulation and coding scheme MCS corresponding to the third data is higher than that corresponding to the fourth data.

13. The method according to claim 11 or 12, wherein the third data and the fourth data are respectively from a third data stream and a fourth data stream of a same multi-modal service.

14. The method according to claim 13, wherein a transmission error rate of the third data stream is lower than that of the fourth data stream.

15. The method according to any one of claims 11 to 14, wherein the fourth resource is located at a same frequency domain position as a demodulation reference signal DMRS in the RB.

16. A data transmission method, comprising:

sending second indication information, wherein the second indication information indicates a third resource and a fourth resource;
receiving third data on the third resource; and
receiving fourth data on the fourth resource, wherein
the third resource and the fourth resource are located in a same resource block RB, and the third resource comprises at least two subcarriers that are spaced in frequency domain, and/or the fourth resource comprises at least two subcarriers that are spaced in frequency domain.

17. The method according to claim 16, wherein a modulation and coding scheme MCS corresponding to the third data is higher than that corresponding to the fourth data.

18. The method according to claim 16 or 17, wherein the third data and the fourth data are respectively from a third data stream and a fourth data stream of a same multi-modal service.

19. The method according to claim 18, wherein a transmission error rate of the third data stream is lower than that of the fourth data stream.

20. The method according to any one of claims 16 to 19, wherein the fourth resource is located at a same frequency domain position as a demodulation reference signal DMRS in the RB.

21. A data transmission apparatus, comprising: an interface unit, configured to receive first indication information; and

a processing unit, configured to determine a first resource and a second resource based on the first indication information, wherein
the interface unit is further configured to: receive first data on the first resource, and receive second data on the second resource, wherein
the first resource and the second resource are located in a same resource block RB, and the first resource comprises at least two subcarriers that are spaced in frequency domain, and/or the second resource comprises at least two subcarriers that are spaced in frequency domain.

22. The apparatus according to claim 21, wherein a modulation and coding scheme MCS corresponding to the first data is higher than that corresponding to the second data.

23. The apparatus according to claim 21 or 22, wherein the first data and the second data are respectively from a first data stream and a second data stream of a same multi-modal service.

24. The apparatus according to claim 23, wherein a transmission error rate of the first data stream is lower than that of the second data stream.

25. The apparatus according to any one of claims 21 to 24, wherein the second resource is located at a same frequency domain position as a demodulation reference signal DMRS in the RB.

26. A data transmission apparatus, comprising an interface unit, configured to send first indication information, wherein the first indication information indicates a first resource and a second resource, wherein

the interface unit is further configured to: send first data on the first resource, and send second data on the second resource, wherein

the first resource and the second resource are located in a same resource block RB, and the first resource comprises at least two subcarriers that are spaced in frequency domain, and/or the second resource comprises at least two subcarriers that are spaced in frequency domain.

27. The apparatus according to claim 26, wherein a modulation and coding scheme MCS corresponding to the first data is higher than that corresponding to the second data.

28. The apparatus according to claim 26 or 27, wherein the first data and the second data are respectively from a first data stream and a second data stream of a same multi-modal service.

29. The apparatus according to claim 28, wherein a transmission error rate of the first data stream is lower than that of the second data stream.

30. The apparatus according to any one of claims 26 to 29, wherein the second resource is located at a same frequency domain position as a demodulation reference signal DMRS in the RB.

31. A data transmission apparatus, comprising: an interface unit, configured to receive second indication information; and

a processing unit, configured to determine a third resource and a fourth resource based on the second indication information, wherein

the interface unit is further configured to: send third data on the third resource, and send fourth data on the fourth resource, wherein

the third resource and the fourth resource are located in a same resource block RB, and the third resource comprises at least two subcarriers that are spaced in frequency domain, and/or the fourth resource comprises at least two subcarriers that are spaced in frequency domain.

32. The apparatus according to claim 31, wherein a modulation and coding scheme MCS corresponding to the third data is higher than that corresponding to the fourth data.

33. The apparatus according to claim 31 or 32, wherein the third data and the fourth data are respectively from a third data stream and a fourth data stream of a same multi-modal service.

34. The apparatus according to claim 33, wherein a transmission error rate of the third data stream is lower than that of the fourth data stream.

35. The apparatus according to any one of claims 31 to 34, wherein the fourth resource is located at a same frequency domain position as a demodulation reference signal DMRS in the RB.

36. A data transmission apparatus, comprising an interface unit, configured to send second indication information, wherein the second indication information indicates a third resource and a fourth resource, wherein the interface unit is further configured to: receive third data on the third resource, and receive fourth data on the fourth resource, wherein the third resource and the fourth resource are located in a same resource block RB, and the third resource comprises at least two subcarriers that are spaced in frequency domain, and/or the fourth resource comprises at least two subcarriers that are spaced in frequency domain.

37. The apparatus according to claim 36, wherein a modulation and coding scheme MCS corresponding to the third data is higher than that corresponding to the fourth data.

38. The apparatus according to claim 36 or 37, wherein the third data and the fourth data are respectively from a third data stream and a fourth data stream of a same multi-modal service.

39. The apparatus according to claim 38, wherein a transmission error rate of the third data stream is lower than that of the fourth data stream.

40. The apparatus according to any one of claims 36 to 39, wherein the fourth resource is located at a same frequency domain position as a demodulation reference signal DMRS in the RB.

41. A communication apparatus, comprising:
one or more processors, wherein the one or more processors are configured to execute a program or instructions, to cause the apparatus to perform the method according to any one of claims 1 to 5.

42. A communication apparatus, comprising:
one or more processors, wherein the one or more processors are configured to execute a program or instructions, to cause the apparatus to perform the method according to any one of claims 6 to 10.

43. A communication apparatus, comprising:
one or more processors, wherein the one or more processors are configured to execute a program or instructions, to cause the apparatus to perform the method according to any one of claims 11 to 15.

44. A communication apparatus, comprising:
one or more processors, wherein the one or more processors are configured to execute a program or instructions, to cause the apparatus to perform the method according to any one of claims 16 to 20.

45. A communication system, comprising the apparatus according to any one of claims 21 to 25 and the apparatus according to any one of claims 26 to 30, or comprising the apparatus according to any one of claims 31 to 35 and the apparatus according to any one of claims 36 to 40.

46. A computer-readable storage medium, wherein the computer-readable storage medium stores a computer program, and when the computer program runs on a computer, the computer is caused to perform the method according to any one of claims 1 to 5, the method according to any one of claims 6 to 10, the method according to any one of claims 11 to 15, or the method according to any one of claims 16 to 20.

47. A computer program product, comprising computer program code, wherein when the computer program code is run, the method according to any one of claims 1 to 5, the method according to any one of claims 6 to 10, the method according to any one of claims 11 to 15, or the method according to any one of claims 16 to 20 is implemented.

FIG. 1

FIG. 2

FIG. 3

200

```
┌─────────────┐                    ┌─────────────┐
│   Network   │                    │  Terminal   │
│   device    │                    │   device    │
└─────────────┘                    └─────────────┘
       │     S210: Send first indication    │
       │              information           │
       │───────────────────────────────────>│
       │                                    │
       │              ┌─────────────────────────────┐
       │              │ S220: Determine a first resource
       │              │     and a second resource    │
       │              └─────────────────────────────┘
       │     S230: Send first data on the first     │
       │                  resource                  │
       │───────────────────────────────────────────>│
       │     S240: Send second data on the          │
       │              second resource               │
       │───────────────────────────────────────────>│
       │                                            │
```

FIG. 4

FIG. 5

FIG. 6

FIG. 7

300

| Network device | | Terminal device |
|---|---|---|

S310: Send second indication information

S320: Determine a third resource and a fourth resource

S330: Send third data on the third resource

S340: Send fourth data on the fourth resource

FIG. 8

Communication apparatus 400

Interface unit 410

Processing unit 420

FIG. 9

Processor 510

Interface 530

500

Memory 520

FIG. 10

Antenna

Control circuit

61

60

Memory ⇔ Processor

62

Input/Output apparatus

FIG. 11

# EP 4 694 487 A1

## INTERNATIONAL SEARCH REPORT

International application No.

**PCT/CN2024/094744**

### A. CLASSIFICATION OF SUBJECT MATTER

H04W 72/231(2023.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, 3GPP: 包含, 包括, 不连续, 不相邻, 传输块, 第二资源, 第一资源, 多, 多模态, 发送, 非连续, 非相邻, 分布, 分配, 隔, 间隔, 接收, 块状干扰, 两, 配置, 频带, 频段, 频率, 频域, 三, 载波, 指示, 资源, 资源块, RB, contain, include, non-contiguous, transport block, second resource, first resource, multi, multi-modality, transmit, distributed, allocated, partitioned, spaced, received, block interference, two, configuration, band, frequency band, frequency, frequency domain, three, carrier, indication, resource, resource block

### C. DOCUMENTS CONSIDERED TO BE RELEVANT

| Category* | Citation of document, with indication, where appropriate, of the relevant passages | Relevant to claim No. |
|---|---|---|
| X | WO 2022194263 A1 (HUAWEI TECHNOLOGIES CO., LTD.) 22 September 2022 (2022-09-22)<br>description, paragraphs [0074]-[0143], and figures 2 and 4 | 1-47 |
| A | CN 111418244 A (GUANGDONG OPPO MOBILE COMMUNICATIONS CO., LTD.) 14 July 2020 (2020-07-14)<br>entire document | 1-47 |
| A | CN 113852583 A (JIANGSU HENGXIN ZHONGLIAN COMMUNICATION TECHNOLOGY CO., LTD.) 28 December 2021 (2021-12-28)<br>entire document | 1-47 |
| A | CN 114079555 A (HUAWEI TECHNOLOGIES CO., LTD.) 22 February 2022 (2022-02-22)<br>entire document | 1-47 |
| A | WO 2019213969 A1 (FUJITSU LTD. et al.) 14 November 2019 (2019-11-14)<br>entire document | 1-47 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2024** | **25 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

34

## INTERNATIONAL SEARCH REPORT
### Information on patent family members

International application No.

**PCT/CN2024/094744**

| Patent document cited in search report | | | Publication date (day/month/year) | Patent family member(s) | | | Publication date (day/month/year) |
|---|---|---|---|---|---|---|---|
| WO | 2022194263 | A1 | 22 September 2022 | None | | | |
| CN | 111418244 | A | 14 July 2020 | WO | 2019119375 | A1 | 27 June 2019 |
| CN | 113852583 | A | 28 December 2021 | None | | | |
| CN | 114079555 | A | 22 February 2022 | None | | | |
| WO | 2019213969 | A1 | 14 November 2019 | None | | | |

Form PCT/ISA/210 (patent family annex) (July 2022)

**EP 4 694 487 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310738360